# EUROPEAN PATENT APPLICATION

(11) **EP 3 683 273 A1**
(43) Date of publication of application: **22.07.2020**
(21) Application number: 19151859.6
(22) Date of filing: 15.01.2019
(51) Int. Cl.: C08L 77/02, C08L 77/06

(54) **FILLED THERMOPLASTIC COMPOSITIONS HAVING IMPROVED FLOW**

(71) Applicant: SABIC Global Technologies B.V., 4612 PX Bergen op Zoom (NL)
(72) Inventor: GUO, Mingcheng, Shanghai, 201319 (CN); ZHANG, Yaqin, Shanghai, 201319 (CN)
(74) Representative: Elzaburu S.L.P.

(57) **Abstract**

A thermoplastic composition includes: (a) from about 20 wt% to about 80 wt% of a first thermoplastic polymer including aliphatic polyamide (PA), polyphthalamide (PPA), copolymers thereof, or a combination thereof; (b) from about 0.1 wt% to about 5 wt% of a second thermoplastic polymer including polybutylene terephthalate (PBT), poly1,4-cyclohexylene dimethylene terephthalate (PCT), polycarbonate (PC), copolymers thereof, or a combination thereof; and (c) from about 10 wt% to about 60 wt% of a filler component. The composition has a melt volume rate (MVR) as measured in accordance with ASTM D1238 that is at least about 15% higher than that of a substantially identical reference thermoplastic composition that does not include the second thermoplastic polymer, or has a melt viscosity (MV) as measured in accordance with ISO 11443 that is at least 15% lower than that of a substantially identical reference thermoplastic composition that does not include the second thermoplastic polymer.

## Description

### FIELD OF THE DISCLOSURE

The present disclosure relates to thermoplastic compositions including polyamide (PA) and/or polyphthalamide (PPA) and a filler component; the thermoplastic compositions have improved flow properties.

### BACKGROUND OF THE DISCLOSURE

Melt flow of high filler loaded thermoplastics compositions will typically drop significantly with filler loading increase. As a result, it can be challenging to fill molds required by some applications; this can be particularly difficult with thin wall mold tools. Flow promoters can be added to improve melt flow, but if too much flow promoter is added it could plate out onto the mold or part surface during molding due to lack of miscibility with the base thermoplastic resin. In addition, compounding of high filler loaded compositions can induce high torque, which can slow the compounding rate and adversely affect productivity. One solution for improving flow of high filler loaded compositions is to use a low viscosity thermoplastic resin as the base matrix. However, because low viscosity is usually associated with low molecular weight, the mechanical properties of thermoplastic compositions including these resins can be reduced.

These and other shortcomings are addressed by aspects of the disclosure.

### SUMMARY

Aspects of the disclosure relate to a thermoplastic composition including: (a) from about 20 wt% to about 80 wt% of a first thermoplastic polymer including aliphatic polyamide (PA), polyphthalamide (PPA), copolymers thereof, or a combination thereof; (b) from about 0.1 wt% to about 5 wt% of a second thermoplastic polymer including polybutylene terephthalate (PBT), polyl,4-cyclohexylene dimethylene terephthalate (PCT), polycarbonate (PC), copolymers thereof, or a combination thereof; and (c) from about 10 wt% to about 60 wt% of a filler component. The composition has a melt volume rate (MVR) as measured in accordance with ASTM D1238 that is at least about 15% higher than that of a substantially identical reference thermoplastic composition that does not include the second thermoplastic polymer, or has a melt viscosity (MV) as measured in accordance with ISO11443 that is at least 15% lower than that of a substantially identical reference thermoplastic composition that does not include the second thermoplastic polymer.

### DETAILED DESCRIPTION

The present disclosure can be understood more readily by reference to the following detailed description of the disclosure and the Examples included therein. Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a filler" includes mixtures of two or more fillers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "BisA," "BPA," or "bisphenol A," which can be used interchangeably, as used herein refers to a compound having a structure represented by the formula: 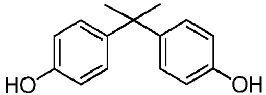 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure related to thermoplastic compositions including: (a) from about 20 wt% to about 80 wt% of a first thermoplastic polymer including aliphatic polyamide (PA), polyphthalamide (PPA), copolymers thereof, or a combination thereof; (b) from about 0.1 wt% to about 5 wt% of a second thermoplastic polymer including polybutylene terephthalate (PBT), polyl,4-cyclohexylene dimethylene terephthalate (PCT), polycarbonate (PC), copolymers thereof, or a combination thereof; and (c) from about 10 wt% to about 60 wt% of a filler component. In some aspects the composition has a melt volume rate (MVR) as measured in accordance with ASTM D1238 that is at least about 15% higher than that of a substantially identical reference thermoplastic composition that does not include the second thermoplastic polymer. In further aspects the composition has a melt viscosity (MV) as measured in accordance with ISO11443 that is at least 15% lower than that of a substantially identical reference thermoplastic composition that does not include the second thermoplastic polymer.

The first thermoplastic polymer may include aliphatic polyamide (PA), polyphthalamide (PPA), copolymers thereof, or a combination thereof. Exemplary aliphatic polyamides include, but are not limited to, nylon 6 (PA6), nylon 66 (PA66), nylon 46 (PA46), nylon 6/12 (PA6/12), nylon 6/10 (PA6/10), nylon 11 (PA11), copolymers thereof, and combinations thereof. Exemplary polyphthalamides include, but are not limited to, PA6T/66 polyphthalamide, PA6T/DT polyphthalamide, PA6T/6I polyphthalamide, PA6T/6I/66 polyphthalamide, PA9T polyphthalamide, PA10T polyphthalamide, copolymers thereof, and combinations thereof. The first thermoplastic polymer may be present in the composition in an amount of from about 20 wt% to about 80 wt%. In certain aspects the first thermoplastic polymer is present in the composition in an amount of from about 30 wt% to about 50 wt%.

The second thermoplastic polymer includes polybutylene terephthalate (PBT), polyl,4-cyclohexylene dimethylene terephthalate (PCT), polycarbonate (PC), copolymers thereof, or a combination thereof.

As used herein, "polybutylene terephthalate" can be used interchangeably with poly(1,4-butylene terephthalate). Polybutylene terephthalate is one type of polyester. Polyesters, which include poly(alkylene dicarboxylates), liquid crystalline polyesters, and polyester copolymers, can be useful in the disclosed thermoplastic compositions of the present disclosure.

The polycarbonate may in some aspects include a linear or short-chain branched PC. In certain aspects the linear or short-chain branched PC includes Bisphenol-A (BPA), sebacic acid/BPA/para-cumyl phenol (PCP) polycarbonate copolymer, polycarbonate/siloxane copolymer (such as but not limited to EXL polycarbonate, available from SABIC), 1.1.1-tris-(p-hydroxyphenyl)ethan (THPE) branched polycarbonate, 4-hydroxybenzonitrile (HBN) endcapped polycarbonate (such as but not limited to CFR polycarbonate available from SABIC), or a combination thereof. As used herein, a "short-chain branched PC" is a branched PC having less than 3 aromatic groups linked to carbonate and/or ester groups of the PC.

The second thermoplastic polymer may be present in the composition in an amount of from about 0.1 wt% to about 5 wt%. In certain aspects the second thermoplastic polymer is present in the composition in an amount of from about 0.5 wt% to about 3 wt%, or from about 1 wt% to about 2 wt%. It has been surprisingly found that if this relatively small amount of second thermoplastic polymer is combined with the first thermoplastic polymer, the flow of the thermoplastic composition can be improved without a significant decrease in the mechanical properties of the thermoplastic composition.

The filler component may in some aspects include a functional filler or a reinforcing filler. A functional filler is a filler that contributes functional properties to the composition, such as but not limited to thermal conductive properties. A reinforcing filler - which may also be considered a functional filler - improves the mechanical properties (e.g., impact strength) to the composition.

The filler component may include, but is not limited to, AlN, Al₄C₃, Al₂O₃, BN, AlON, MgSiN₂, SiC, Si₃N₄, graphite, expanded graphite, ceramic-coated graphite, ZnS, CaO, MgO, ZnO, TiO2, CaCO₃, mica, BaO, BaSO₄, CaSiO₃, CaSO₄, ZrO₂, SiO₂, glass beads, glass flakes, hollow glass beads, MgO•xAl₂O₃, CaMg(CO₃)₂, clay, talc, wollastonite, γ-AlOOH (Boehmite), magnesium hydroxide, aluminum hydroxide, conductive carbon black, and combinations thereof.

The composition includes from about 10 wt% to about 60 wt% of the filler component. In some aspects the composition includes from about 40 wt% to about 60 wt% of the filler component, or from about 50 wt% to about 60 wt% of the filler component.

In some aspects the thermoplastic composition includes an impact modifier, a third thermoplastic polymer, or a combination thereof. Exemplary impact modifiers include, but are not limited to, ethylene-propylene (EP) rubber (e.g., ethylene propylene monomer (EPM) rubber, ethylene propylene diene monomer (EPDM) rubber, and maleic anhydride grafted EP copolymer), acrylic rubber, methylmethacrylate-butadiene-styrene terpolymer (MBS), ethylene-co-glycidyl methacrylate (EGMA), ethylene-methyl acrylate with glycidyl methacrylate (EMAGMA), styrene-butadiene-styrene (SBS), styrene-ethylene/1-butene-styrene (SEBS), ethylene ethyl acrylate (EEA), polyester ether elastomer, and combinations thereof.

The third thermoplastic polymer may include, but is not limited to, polyethylene (PE), polypropylene (PP), polystyrene (PS), poly(p-phenylene oxide) (PPO), acrylonitrile butadiene styrene (ABS), copolymers thereof, and combinations thereof.

The thermoplastic composition includes in some aspects from greater than 0 wt% to about 20 wt% of the impact modifier, the third thermoplastic polymer, or the combination thereof.

In certain aspects the composition includes at least one additional additive. The at least one additional additive may include, but is not limited to, a reinforcing agent, a flame retardant, a pigment, a flow promoter, a de-molding agent, a thermal stabilizer, a light stabilizer, an ultraviolet (UV) resistant agent, a UV absorbing agent, and combinations thereof.

The reinforcing agent in some aspects includes glass fibers, carbon fibers, or a combination thereof. The glass fibers may have a circular or non-circular (e.g. flat) cross section.

The flame retardant may include, but is not limited to, a halogenated flame retardant (e.g., tretabromo bisphenol A oligomers such as BC58 and BC52, brominated polystyrene or poly(dibromo-styrene), brominated epoxies, decabromodiphenylene oxide, pentabrombenzyl acrylate monomer, pentabromobenzyl acrylate polymer, ethylene-bis(tetrabromophthalimide, bis(pentabromobenzyl)ethane), a metal hydroxide (e.g., Mg(OH)₂ and Al(OH)₃), melamine cyanurate, a phosphor-based flame retardant (e.g., red phosphorus, melamine polyphosphate, phosphate esters, metal phosphinates such as Clariant Exolit® OP, and ammonium polyphosphate), expandable graphite, sodium or potassium perfluorobutane sulfate, sodium or potassium perfluorooctane sulfate, sodium or potassium diphenylsulfone sulfonate, sodium or potassium-2,4,6-trichlorobenzoate, N-(p-tolylsulfonyl)-p-toluenesulfimide potassium salt, N-(N'-benzylaminocarbonyl)sulfanylimide potassium salt, and combinations thereof.

The composition in some aspects includes from greater than 0 wt% to about 50 wt% of the least one additional additive.

### Properties of Thermoplastic Compositions

The thermoplastic composition has improved flow characteristics as compared to conventional compositions. In some aspects the composition has a melt volume rate (MVR) as measured in accordance with ASTM D1238 that is at least about 15% higher than that of a substantially identical reference thermoplastic composition that does not include the second thermoplastic polymer.

As used herein, a "substantially identical reference composition" is a composition that includes the same components, and the same amounts of the components, as the example composition, except that the reference composition does not include the recited component (e.g., the second thermoplastic polymer).

In further aspects the thermoplastic composition has a melt viscosity (MV) as measured in accordance with ISO11443 that is at least 15% lower than that of a substantially identical reference thermoplastic composition that does not include the second thermoplastic polymer.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polycarbonate has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles, structural components or functional components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In particular aspects the article is a component of an electronics device or a lighting device.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:
a. from about 20 wt% to about 80 wt% of a first thermoplastic polymer comprising aliphatic polyamide (PA), polyphthalamide (PPA), copolymers thereof, or a combination thereof;
b. from about 0.1 wt% to about 5 wt% of a second thermoplastic polymer comprising polybutylene terephthalate (PBT), polyl,4-cyclohexylene dimethylene terephthalate (PCT), polycarbonate (PC), copolymers thereof, or a combination thereof; and
c. from about 10 wt% to about 60 wt% of a filler component,
wherein the composition has a melt volume rate (MVR) as measured in accordance with ASTM D1238 that is at least about 15% higher than that of a substantially identical reference thermoplastic composition that does not include the second thermoplastic polymer; or
wherein the composition has a melt viscosity (MV) as measured in accordance with ISO11443 that is at least 15% lower than that of a substantially identical reference thermoplastic composition that does not include the second thermoplastic polymer.

Aspect 2. The thermoplastic composition according to Aspect 1, wherein the aliphatic polyamide comprises nylon 6 (PA6), nylon 66 (PA66), nylon 46 (PA46), nylon 6/12 (PA6/12), nylon 6/10 (PA6/10), nylon 11 (PA11), copolymers thereof, or a combination thereof.

Aspect 3. The thermoplastic composition according to Aspect 1 or 2, wherein the polyphthalamide comprises one or more of PA6T/66 polyphthalamide, PA6T/DT polyphthalamide, PA6T/6I polyphthalamide, PA6T/6I/66 polyphthalamide, PA9T polyphthalamide, PA10T polyphthalamide, copolymers thereof, or a combination thereof.

Aspect 4. The thermoplastic composition according to any of Aspects 1 to 3, wherein the second thermoplastic polymer comprises polycarbonate (PC) and the PC comprises a linear or short-chain branched PC.

Aspect 5. The thermoplastic composition according to Aspect 4, wherein the linear or short-chain branched PC comprises Bisphenol-A (BPA), sebacic acid/BPA/para-cumyl phenol (PCP) polycarbonate copolymer, polycarbonate/siloxane copolymer, 1.1.1-tris-(p-hydroxyphenyl)ethan (THPE) branched polycarbonate, 4-hydroxybenzonitrile (HBN) endcapped polycarbonate, or a combination thereof.

Aspect 6. The thermoplastic composition according to any of Aspects 1 to 5, wherein the filler component comprises a functional or reinforcing filler.

Aspect 7. The thermoplastic composition according to any of Aspects 1 to 6, wherein the filler component comprises AlN, Al₄C₃, Al₂O₃, BN, AlON, MgSiN₂, SiC, Si₃N₄, graphite, expanded graphite, ceramic-coated graphite, ZnS, CaO, MgO, ZnO, TiO2, CaCO₃, mica, BaO, BaSO₄, CaSiO₃, CaSO₄, ZrO₂, SiO₂, glass beads, glass flakes, hollow glass beads, MgO•xAl₂O₃, CaMg(CO₃)₂, clay, talc, wollastonite, γ-AlOOH (Boehmite), magnesium hydroxide, aluminum hydroxide, conductive carbon black, or a combination thereof.

Aspect 8. The thermoplastic composition according to any of Aspects 1 to 7, wherein the composition further comprises from greater than 0 wt% to about 20 wt% of an impact modifier, a third thermoplastic polymer, or a combination thereof.

Aspect 9. The thermoplastic composition according to Aspect 8, wherein the impact modifier comprises an ethylene-propylene (EP) rubber, acrylic rubber, methylmethacrylate-butadiene-styrene terpolymer (MBS), ethylene-co-glycidyl methacrylate (EGMA), ethylene-methyl acrylate with glycidyl methacrylate (EMAGMA), styrene-butadiene-styrene (SBS), styrene-ethylene/1-butene-styrene (SEBS), ethylene ethyl acrylate (EEA), polyester ether elastomer, or a combination thereof.

Aspect 10. The thermoplastic composition according to Aspect 8 or 9, wherein the third thermoplastic polymer comprises polyethylene (PE), polypropylene (PP), polystyrene (PS), poly(p-phenylene oxide) (PPO), acrylonitrile butadiene styrene (ABS), copolymers thereof, or a combination thereof.

Aspect 11. The thermoplastic composition according to any of Aspects 1 to 10, wherein the composition further comprises from greater than 0 wt% to about 50 wt% of at least one additional additive.

Aspect 12. The thermoplastic composition according to Aspect 11, wherein the at least one additional additive comprises a reinforcing agent, a flame retardant, a pigment, a flow promoter, a de-molding agent, a thermal stabilizer, a light stabilizer, an ultraviolet (UV) resistant agent, a UV absorbing agent, or a combination thereof.

Aspect 13. The thermoplastic composition according to Aspect 12, wherein the reinforcing agent comprises fibers comprising glass fibers, carbon fibers, or a combination thereof.

Aspect 14. The thermoplastic composition according to Aspect 13, wherein the fibers have a circular or a non-circular cross section.

Aspect 15. The thermoplastic composition according to any of Aspects 12 to 14, wherein the flame retardant is a halogenated flame retardant, a metal hydroxide, melamine cyanurate, a phosphor-based flame retardant, expandable graphite, sodium or potassium perfluorobutane sulfate, sodium or potassium perfluorooctane sulfate, sodium or potassium diphenylsulfone sulfonate, sodium or potassium-2,4,6-trichlorobenzoate, N-(p-tolylsulfonyl)-p-toluenesulfimide potassium salt, N-(N'-benzylaminocarbonyl)sulfanylimide potassium salt, or a combination thereof.

Aspect 16. An article comprising the thermoplastic composition according to any of Aspects 1 to 15.

Aspect 17. The article according to Aspect 16, wherein the article is injection molded or extrusion molded.

Aspect 18. The article according to Aspect 16 or 17, wherein the article is a component of an electronics device or a lighting device.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Comparative (C) and example (Ex) compositions were prepared by a twinscrew extruder compounding process and an injection molding process under normal polyamide and polyphthalamide processing conditions. Specifically, samples were prepared using a Twin screw extruder (Toshiba TEM-37BS, L/D=40.5). The temperature of the extruder barrel was set at 240-260°C for polyamide and 280-310°C for polyphthalamide. Pellets extruded from the extruder were then injection molded into different standard mechanical property testing bars.
Melt volume rate (MVR) data was obtained according to ASTM D1238
Melt viscosity (MV) data was obtained according to ISO11443

Tensile data was obtained according to ASTM D638.

Flexural data was obtained according to ASTM 790.

Notched Izod Impact (NII) and Unnotched Izod Impact (UNI) data were obtained at room temperature (RT) according to ASTM D256 and ASTM D4812 respectively.

Density data was obtained according to ASTM D792.

Components used in the compositions are shown in Table 1:

**Table 1: Components**

| **Component** | **Supplier** | CAS**#** |
|---|---|---|
| Domomid 24 PA6 (polyamide) | DOMO Chemicals | 25038-54-4 |
| NHU PPA N600 (polyphthalamide) | Zhejiang Nhu Special Materials | 25776-72-1 |
| PBT, 1100X, high viscosity | Changchun Plastic Co., Ltd., | 26062-94-2 |
| PBT, 1200-211D, low viscosity | Changchun Plastic Co., Ltd., | 26062-94-2 |
| THPE Branched PC Resin | SABIC | 111211-39-3 |
| Low Fries PC 102X (High Mw PC) | SABIC | 111211-39-3 |
| Asbury graphite 1125, filler | Asbury | 7782-42-5 |
| Glass fiber PFG 3540 1/8" (LNP-AP), filler | PPG | 65997-17-3 |
| Pentaerythritol tetrastearate (PETS), mold release | Faci Asia Pacific PTE Ltd | 115-83-3 |
| Tris(2,4-ditert-butylphenyl) phosphite, IRGAFOS 168, antioxidant/heat stabilizer | Ciba | 31570-04-4 |
| Phenolic prim antioxidant for PA, antioxidant/heat stabilizer | Ciba | 23128-74-7 |
| Polyethylene, granular, LLDPE M200024 | SABIC | 9019-29-8 |
| Calcium stearate, SYNPRO 15F, crystallinity control | SYNPRO | 1592-23-0 |
| Antioxidant 1010, antioxidant/thermal stabilizer | BASF | 6683-19-8 |
| Ultranox 626, pentaerythritol diphosphite, antioxidant/thermal stabilizer | ADDIVANT | 26741-53-7 |
| Carbon black M800, colorant | Cabot | 1333-86-4 |

A comparative composition (C1) and example compositions (Ex 1.1-1.3) using aliphatic polyamide (PA6) and varying amounts of a second thermoplastic polymer (low and high viscosity PBT) were prepared and tested as shown in Table 2:

**Table 2: PA as primary resin, PBT as second resin**

| **Component** | **Unit** | **C1** | **Ex1.1** | **Ex1.2** | **Ex1.3** |
|---|---|---|---|---|---|
| Domomid 24 PA6 | % | 39.15 | 38.15 | 38.15 | 37.15 |
| PETS | % | 0.5 | 0.5 | 0.5 | 0.5 |
| PBT, 1200-211D, low viscosity | % | | 1 | | 2 |
| PBT, 1100X, high viscosity | % | | | 1 | |
| Asbury graphite 1125 | % | 50 | 50 | 50 | 50 |
| Glass fiber PFG 3540 1/8" (LNP-AP) | % | 10 | 10 | 10 | 10 |
| IRGAFOS 168 phosphite stabilizer | % | 0.15 | 0.15 | 0.15 | 0.15 |
| Phenolic prim antioxidant for PA | % | 0.2 | 0.2 | 0.2 | 0.2 |
| **Total:** | | 100.00 | 100.00 | 100.00 | 100.00 |

| **Properties** | | | | | |
|---|---|---|---|---|---|
| | Unit | | | | |
| App. viscosity-@ 100 1/s @ 285°C | Pa.s | 986.9 | 623.3 | 792.4 | 617.8 |
| Change compared to control: | % | - | -36.8 | -19.7 | -37.4 |
| App. viscosity-@ 200 1/s @ 285°C | Pa.s | 705.9 | 445.4 | 549.9 | 455.4 |
| App. viscosity-@ 500 1/s @ 285°C | Pa.s | 447.9 | 294.6 | 360.1 | 310.1 |
| App. viscosity-@ 1000 1/s @ 285°C | Pa.s | 308.2 | 222.0 | 250.5 | 224.2 |
| App. viscosity-@ 1500 1/s @ 285°C | Pa.s | 244.7 | 169.9 | 197.7 | 181.1 |
| App. viscosity-@ 3000 1/s @ 285°C | Pa.s | 142.9 | 124.1 | 139.5 | 125.1 |
| App. viscosity-@ 5000 1/s @ 285°C | Pa.s | 105.5 | 99.5 | 103.4 | 91.8 |
| MVR-Avg (285°C/6.7kg) | cm³/10 min | 6.9 | 10.7 | 10.7 | 13.0 |
| Flow improvement under 285°C/6.7kg | % | - | 55.4 | 54.7 | 87.8 |
| MVR-Avg (285°C/10kg) | cm³/10 min | 7.7 | 13.7 | 14.8 | 14.5 |
| Flow improvement at 285°C/10kg | % | - | 78.4 | 92.5 | 88.7 |
| Notched Izod Impact Strength-Avg | J/m | 32.2 | 31.7 | 34 | 31.7 |
| Unnotched Izod Impact Strength-Avg | J/m | 73 | 128 | 130 | 131 |
| Through plane thermal conductivity - Avg | w/mk | 3.41 | 3.45 | 3.54 | 3.34 |
| Density-A vg | g/cm3 | 1.629 | 1.634 | 1.645 | 1.642 |

From the data it was seen that addition of the second thermoplastic polymer to the composition resulted in a decrease in the apparent viscosity and a higher flow (MVR). The mechanical properties of the composition (e.g., NII, UNNI) were not adversely affected.

Additional comparative (C2) and example (Ex2.1-Ex2.4) compositions using polyphthalamide (PPA) and varying amounts of a second thermoplastic polymer (low and high viscosity PBT, THPE and high Mw PC) were prepared and tested as shown in Table 3:

**Table 3: PPA as primary resin, PBT or PC as second resin**

| **Component** | **Unit** | **C2** | **Ex2.1** | **Ex2.2** | **Ex2.3** | **Ex2.4** |
|---|---|---|---|---|---|---|
| NHU PPA N600 | % | 46.5 | 45.5 | 45.5 | 45.5 | 45.5 |
| Polyethylene, granular, LLDPE | % | 0.6 | 0.6 | 0.6 | 0.6 | 0.6 |
| Glass fiber HP-3540 | % | 52 | 52 | 52 | 52 | 52 |
| Calcium stearate | % | 0.1 | 0.1 | 0.1 | 0.1 | 0.1 |
| Carbon black M800 | % | 0.4 | 0.4 | 0.4 | 0.4 | 0.4 |
| Antioxidant 1010 | % | 0.2 | 0.2 | 0.2 | 0.2 | 0.2 |
| Ultranox 626, pentaerythritol diphosphite | % | 0.2 | 0.2 | 0.2 | 0.2 | 0.2 |
| PBT, High Viscosity | % | | 1 | | | |
| PBT, 1200-21 1D, low viscosity | % | | | 1 | | |
| THPE Branched PC Resin | % | | | | 1 | |
| Low Fries PC 102X (High Mw PC) | % | | | | | 1 |
| **Total:** | | 100.00 | 100.00 | 100.00 | 100.00 | 100.00 |

| **Properties** | | | | | | |
|---|---|---|---|---|---|---|
| App. viscosity-@ 100 1/s @ 330°C | Pa.s | 305.0 | 169.1 | 193.4 | 213.3 | 235.4 |
| Change compared to control | % | - | -44.6 | -36.6 | -30.1 | -22.8 |
| App. viscosity-@ 200 1/s @ 330°C | Pa.s | 197.8 | 114.4 | 140.4 | 168.0 | 154.7 |
| App. viscosity-@ 500 1/s @ 330°C | Pa.s | 131.5 | 80.5 | 93.5 | 106.1 | 102.4 |
| App. viscosity-@ 1000 1/s @ 330°C | Pa.s | 100.6 | 62.1 | 69.2 | 82.0 | 78.4 |
| App. viscosity-@ 1500 1/s @ 330°C | Pa.s | 74.0 | 48.1 | 53.9 | 64.5 | 65.9 |
| App. viscosity-@ 3000 1/s @ 330°C | Pa.s | 54.3 | 29.5 | 40.3 | 47.4 | 47.5 |
| App. viscosity-@ 5000 1/s @ 330°C | Pa.s | 45.6 | 22.5 | 32.4 | 37.7 | 39.9 |
| Modulus of Elasticity-Avg | MPa | 17680 | 17107 | 17789 | 17749 | 17796 |
| Stress at Break-Avg | MPa | 205.6 | 211.2 | 221.1 | 220.8 | 217.3 |
| Elongation at Break-Avg | % | 2 | 1.6 | 1.6 | 1.5 | 1.5 |
| Flexural Modulus-Avg | MPa | 16500 | 16800 | 16800 | 16800 | 16800 |
| Flexural Stress@Yield-Avg | MPa | 352 | 336 | 343 | 351 | 335 |
| Notched Izod Impact Strength@RT-Avg | J/m | 137 | 127 | 133 | 131 | 132 |
| Unntoched Izod Impact Strength@ RT-Avg | J/m | 911 | 1060 | 1120 | 1090 | 1170 |
| HDT (1.82MPa, 3.2mm) | °C | 280 | 280 | 280 | 280 | 280 |
| Mold shrinkage parallel-Avg | % | 0.34 | 0.37 | 0.33 | 0.32 | 0.37 |
| Mold shrinkage perpendicular-Avg | % | 0.56 | 0.54 | 0.49 | 0.44 | 0.54 |
| Density-Avg | g/cm3 | 1.624 | 1.620 | 1.634 | 1.635 | 1.635 |

From the data it was seen that addition of the second thermoplastic polymer to the PPA-based composition resulted in a decrease in the apparent viscosity and a higher flow (MVR) without adversely affecting the mechanical performance of the compositions.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. A thermoplastic composition comprising:
a. from about 20 wt% to about 80 wt% of a first thermoplastic polymer comprising aliphatic polyamide (PA), polyphthalamide (PPA), copolymers thereof, or a combination thereof;
b. from about 0.1 wt% to about 5 wt% of a second thermoplastic polymer comprising polybutylene terephthalate (PBT), polyl,4-cyclohexylene dimethylene terephthalate (PCT), polycarbonate (PC), copolymers thereof, or a combination thereof; and
c. from about 10 wt% to about 60 wt% of a filler component,
wherein the composition has a melt volume rate (MVR) as measured in accordance with ASTM D1238 that is at least about 15% higher than that of a substantially identical reference thermoplastic composition that does not include the second thermoplastic polymer; or
wherein the composition has a melt viscosity (MV) as measured in accordance with ISO11443 that is at least 15% lower than that of a substantially identical reference thermoplastic composition that does not include the second thermoplastic polymer.

2. The thermoplastic composition according to claim 1, wherein the aliphatic polyamide comprises nylon 6 (PA6), nylon 66 (PA66), nylon 46 (PA46), nylon 6/12 (PA6/12), nylon 6/10 (PA6/10), nylon 11 (PA11), copolymers thereof, or a combination thereof.

3. The thermoplastic composition according to claim 1 or 2, wherein the polyphthalamide comprises one or more of PA6T/66 polyphthalamide, PA6T/DT polyphthalamide, PA6T/6I polyphthalamide, PA6T/6I/66 polyphthalamide, PA9T polyphthalamide, PA10T polyphthalamide, copolymers thereof, or a combination thereof.

4. The thermoplastic composition according to any of claims 1 to 3, wherein the second thermoplastic polymer comprises polycarbonate (PC) and the PC comprises a linear or short-chain branched PC.

5. The thermoplastic composition according to claim 4, wherein the linear or short-chain branched PC comprises Bisphenol-A (BPA), sebacic acid/BPA/para-cumyl phenol (PCP) polycarbonate copolymer, polycarbonate/siloxane copolymer, 1.1.1-tris-(p-hydroxyphenyl)ethan (THPE) branched polycarbonate, 4-hydroxybenzonitrile (HBN) endcapped polycarbonate, or a combination thereof.

6. The thermoplastic composition according to any of claims 1 to 5, wherein the filler component comprises a functional or reinforcing filler.

7. The thermoplastic composition according to any of claims 1 to 6, wherein the filler component comprises AlN, Al₄C₃, Al₂O₃, BN, AlON, MgSiN₂, SiC, Si₃N₄, graphite, expanded graphite, ceramic-coated graphite, ZnS, CaO, MgO, ZnO, TiO2, CaCO₃, mica, BaO, BaSO₄, CaSiO₃, CaSO₄, ZrO₂, SiO₂, glass beads, glass flakes, hollow glass beads, MgO•xAl₂O₃, CaMg(CO₃)₂, clay, talc, wollastonite, γ-AlOOH (Boehmite), magnesium hydroxide, aluminum hydroxide, conductive carbon black, or a combination thereof.

8. The thermoplastic composition according to any of claims 1 to 7, wherein the composition further comprises from greater than 0 wt% to about 20 wt% of an impact modifier, a third thermoplastic polymer, or a combination thereof.

9. The thermoplastic composition according to claim 8, wherein the impact modifier comprises an ethylene-propylene (EP) rubber, acrylic rubber, methylmethacrylate-butadiene-styrene terpolymer (MBS), ethylene-co-glycidyl methacrylate (EGMA), ethylene-methyl acrylate with glycidyl methacrylate (EMAGMA), styrene-butadiene-styrene (SBS), styrene-ethylene/1-butene-styrene (SEBS), ethylene ethyl acrylate (EEA), polyester ether elastomer, or a combination thereof.

10. The thermoplastic composition according to claim 8 or 9, wherein the third thermoplastic polymer comprises polyethylene (PE), polypropylene (PP), polystyrene (PS), poly(p-phenylene oxide) (PPO), acrylonitrile butadiene styrene (ABS), copolymers thereof, or a combination thereof.

11. The thermoplastic composition according to any of claims 1 to 10, wherein the composition further comprises from greater than 0 wt% to about 50 wt% of at least one additional additive, wherein the at least one additional additive comprises a reinforcing agent, a flame retardant, a pigment, a flow promoter, a de-molding agent, a thermal stabilizer, a light stabilizer, an ultraviolet (UV) resistant agent, a UV absorbing agent, or a combination thereof.

12. The thermoplastic composition according to claim 11, wherein the reinforcing agent comprises fibers comprising glass fibers, carbon fibers, or a combination thereof.

13. The thermoplastic composition according to claim 12, wherein the fibers have a circular or a non-circular cross section.

14. The thermoplastic composition according to any of claims 11 to 13, wherein the flame retardant is a halogenated flame retardant, a metal hydroxide, melamine cyanurate, a phosphor-based flame retardant, expandable graphite, sodium or potassium perfluorobutane sulfate, sodium or potassium perfluorooctane sulfate, sodium or potassium diphenylsulfone sulfonate, sodium or potassium-2,4,6-trichlorobenzoate, N-(p-tolylsulfonyl)-p-toluenesulfimide potassium salt, N-(N'-benzylaminocarbonyl)sulfanylimide potassium salt, or a combination thereof.

15. An article comprising the thermoplastic composition according to any of claims 1 to 14, wherein the article is a component of an electronics device or a lighting device.
